# EUROPÄISCHE PATENTSCHRIFT

(11) **EP 0 728 966 B1**
(45) Veröffentlichungstag und Bekanntmachung des Hinweises auf die Patenterteilung: **26.09.2001**
(21) Anmeldenummer: 95120234.0
(22) Anmeldetag: 20.12.1995
(51) Int. Cl.: F16H 61/14

(54) **Schalt-/Regelventil zum Steuern von hydrodynamischen Drehmomentwandlern automatischer Schaltgetriebe**
Shift/control valve to control hydrodynamic torque converters of automatically shifting transmissions
Soupape de passage / commande pour convertisseurs de couple hydrodynamiques de transmissions automatiques

(30) Priorität: 21.02.1995 DE 19505987
(43) Veröffentlichungstag der Anmeldung: 28.08.1996
(73) Patentinhaber: Ford-Werke Aktiengesellschaft, 50735 Köln (DE); FORD FRANCE S. A., 92506 Rueil-Malmaison (FR); FORD MOTOR COMPANY LIMITED, Brentwood, Essex CM13 3BW (GB)
(72) Erfinder: Wirtz, Hans-Peter, D-50769 Köln (DE)
(74) Vertreter: Neidl-Stippler, Cornelia, Dr.

(56) Entgegenhaltungen:
- DE-A- 3 130 871
- DE-A- 3 818 102
- DE-A- 3 928 048
- GB-A- 2 203 505
- US-A- 4 466 311

## Beschreibung

Die Erfindung betrifft ein Schalt-/Regelventil zum Steuern von hydrodynamischen Drehmomentwandlern automatischer Schaltgetriebe, mit den Merkmalen gemäß Oberbegriff von Anspruch 1.

Automatische Schaltgetriebe von Kraftfahrzeugen sind im allgemeinen mit hydrodynamischen Drehmomentwandlern ausgestattet, wie sie bspw. in der EP-A-0433619 oder der EP-A-419782 oder allgemein in Gerigk, Bruhn, Danner "Kraftfahrzeugtechnik", Westermann-Verlag, 2. Auflage, 1993, Seite 349 bis 351 beschrieben sind, auf deren Offenbarung zur Vermeidung von Wiederholungen im vollem Umfang Bezug genommen wird. Hydrodynamische Drehmomentwandler ermöglichen ein sanftes, ruckfreies Anfahren des Kraftfahrzeuges bei niedrigen Drehzahlen der Antriebswelle des Motors sowie ein weiches Schalten des automatischen Getriebes. Durch Verwendung dieser Wandler erfolgt eine geräuscharme, verschleißarme und stufenlose Übertragung des Motordrehmomentes auf das Getriebe.

Hydrodynamische Drehmomentwandler umfassen ein mit der Antriebswelle verbundenes Pumpenrad, ein sich über einen Freilauf abstützendes Leitrad und ein mit der in das Getriebe führenden Welle verbundenes Turbinenrad. Das Gehäuse des Drehmomentwandlers, in dem die vorgenannten Bauteile angeordnet sind, wird über ein Leitungssystem mit einer Druckflüssigkeit, im Kraftfahrzeugbereich meist Hydrauliköl, vollständig gefüllt. Der Druck im hydrodynamischen Drehmomentwandler wird über Steuerventile geregelt. Nachfolgend wird die Erfindung anhand von Hydrauliköl erläutert werden, wobei sie aber keineswegs auf Hydrauliköl als Druckmedium beschränkt ist.

Bei niedrigen Eingangsdrehzahlen überträgt das Pumpenrad einen Teil der Bewegungsenergie auf das Hydrauliköl, das das Turbinenrad in Drehung versetzt. Mit Hilfe des Leitrades wird der Hydraulikölstrom so umgelenkt, daß die Wirkung des Pumpenrades verstärkt wird. Dieser Schaltzustand des Drehmomentwandlers wird als "Unlock-Lage" bezeichnet.

Bei hohen Drehzahlen verbindet eine zwischen dem mit dem Antrieb verbunden Pumpenrad und dem Turbinenrad angeordnete Kupplungseinheit, die sogenannte Wandlerüberbrückungskupplung, das Pumpenrad kraftschlüssig mit dem Turbinenrad (sogenannte "Lock-Up-Lage"), um die bei der Drehmomentübertragung mit Hilfe des rotierenden ölstroms entstehenden Drehmoment-Verluste so gering wie möglich zu halten.

Durch die kraftschlüssige Übertragung des Drehmomentes in der Lock-Up-Lage wird jedoch auch das unruhige Verhalten des Antriebes direkt durch die Überbrückungskupplung auf das Getriebe übertragen, so daß das Fahrverhalten des Fahrzeuges nachteilig beeinflußt wird.

Um eine ruckfreie Übertragung des Drehmomentes im Wandler auch in der Lock-Up-Lage gewährleisten zu können, kann der Schlupf zwischen Pumpenrad und Turbinenrad variiert werden. Mit Hilfe einer aus mehreren Steuerventilen bestehenden Steuereinrichtung wird der Druck der Hydraulikflüssigkeit innerhalb des Drehmomentwandlers verändert, so daß sich die Kupplungseinrichtung kurzzeitig öffnet. Dabei rutscht die Kupplung durch, d.h. der Schlupf zwischen Pumpenrad und Turbinenrad nimmt zu, und schlagartige, kurzfristige Drehmomentwechsel aufgrund unruhigen Antriebsverhaltens können ausgeglichen werden.

Zur Steuerung der Kupplungseinrichtung besitzt der hydrodynamische Drehmomentwandler zwei über ein Steuerventil angesteuerte Eingänge, die abhängig vom Schaltzustand der Kupplungseinrichtung mit unter Druck stehendem Hydrauliköl versorgt werden. Der erste der beiden Eingänge liegt direkt am Wandlergehäuse, während der zweite Eingang mit einem Hohlraum innerhalb der Kupplungseinrichtung verbunden ist.

Bei niedrigen Drehzahlen des Turbinenrades liegt am ersten Eingang der Kupplungseinrichtung ein niedriger Druck an, während der zweite Eingang mit einem deutlich höheren Druck beaufschlagt ist. Der Druckunterschied zwischen den Eingängen führt zu einem Auseinanderrücken der Kupplungseinrichtung, die dadurch ausgekuppelt wird. Das über den zweiten Eingang in die Kupplungseinrichtung fließende Hydrauliköl strömt durch die Kupplungseinrichtung in das Wandlergehäuse und von dort über den ersten Eingang in das Leitungsnetz der Steuerungshydraulik (Unlock-Lage).

Ist der Schaltpunkt zwischen Unlock- und Lock-Up-Lage erreicht, wird der erste Eingang mit einem deutlich höheren Druck beaufschlagt als der zweite Eingang. Der jetzt im Wandlergehäuse wirkende Druck preßt die Kupplungseinrichtung gegen den in der Kupplungseinrichtung wirkenden Druck zusammen, so daß das Pumpenrad kraftschlüssig mit dem Turbinenrad verbunden ist (Lock-Up-Lage).

In der Kupplungseinrichtung angeordnete Drosselbohrungen oder unmittelbar im Reibbelag der Kupplungsscheibe angebrachte radiale Kanäle ermöglichen ein Einströmen des im Wandlergehäuse befindlichen Hydrauliköls in den Hohlraum in der Kupplungseinrichtung. Dadurch kann das Hydrauliköl vom ersten Eingang des Wandlers über das Wandlergehäuse in die Kupplungseinrichtung und von dort in den zweiten Eingang weiterströmen, so daß der Hydrauliköl-Kreislauf geschlossen bleibt.

Um, wie oben erwähnt, den Schlupf zwischen Pumpenrad und Turbinenrad während der Lock-Up-Lage gezielt regeln zu können, wird der am ersten Eingang des Wandlers wirkende Druck mit Hilfe der Steuereinrichtung variiert. Dadurch kommt es zu einem unvollständigen Schließen der Kupplungseinrichtung und damit zu einem partiellen Durchrutschen der Kupplungsscheiben.

Da das Hydrauliköl durch die fortgesetzte Bewegung Walkarbeit unterworfen ist und sich erhitzt, muß es mit Hilfe einer meist außerhalb des Wandlers angeordneten Kühleinrichtung ständig gekühlt werden. Die Abzweigung von Hydrauliköl ist in " Automobiltechnische Zeitschrift 88 (1986), 81 - 87, detailliert beschrieben.

Die Steuerung des Hydraulikölflusses, der in hydrodynamischen Drehmomentwandlern zum Antrieb der Turbinen- und Pumpenräder sowie zum Schalten der in den Drehmomentwandlern integrierten Kupplungen dient, erfolgt, wie oben angegeben, über Steuereinrichtungen , die mehrere Funktionen gleichzeitig erfüllen.

So offenbart beispielsweise die DE-A-38 18 102 eine Steuereinrichtung, bestehend aus einem Überbrückungskupplungssteuerventil mit einem Steuerschieber, einem Magnetventil, einer ölpumpe, einer Steuerung und einer Schmiereinrichtung. Zur Betätigung der Überbrückungskupplung wird das von der ölpumpe geförderte Hydrauliköl vom Überbrückungskupplungssteuerventil entsprechend des Schaltzustandes des Wandlers entweder der Ein- oder Ausrückkammer der Überbrückungskupplung zugeleitet. Die Position des den Ölfluß zur Überbrückungskupplung steuernden Steuerschiebers wird mit Hilfe des Magnetventils geregelt, das einen zweiten, vom ersten ölkreislauf unabhängigen, am Steuerschieberende wirkenden Öldruck variiert. Die öffnungsdauer des Magentventils wird von einer elektronischen Steuerung gesteuert.

Während die Versorgung der Überbrückungskupplung mit Hydrauliköl über die ölpumpe erfolgt, wird das Überbrückungskupplungssteuerventil mit Hilfe eines zweiten, unabhängingen Ölkreislaufes angesteuert. Neben zusätzlichen Hydraulikkomponenten, wie einer weiteren Ölpumpe, einem Magnetventil oder weiteren Leitungen, ist eine aufwendige elektronische Steuerung notwendig, die die verschiedenen Ölkreisläufe aufeinander abstimmt.

Eine weitere Steuerungseinrichtung für eine Überbrückungskupplung eines Drehmomentwandlers offenbart die DE-C-31 30 871. Diese Steuerungseinrichtung besteht unter anderem aus einer die Überbrückungskupplung betätigenden Fluiddruck-Steuereinheit, einem Drehmomentwandler-Steuerventil, einem Magnetventil, einer von einem Getriebe-Betriebsart-Detektor gesteuerten Druckreduzier-Ventileinheit und einer ölpumpe.

Die Fluiddruck-Steuereinheit ist für den Schaltzustand der Überbrückungskupplung zuständig, dabei schaltet eine Ventilspindel den ölfluß zur Ein- bzw. Ausrückkammer der Überbrückungskupplung. Das Drehmomentwandler-Steuerventil regelt den Druck des Öls, das über die Fluiddruck-Steuereinheit der Überbrückungskupplung zugeführt wird und damit den an der Überbrückungskupplung wirkenden Schlupf.

Unabhängig davon wird die Position des Kolbens der Druckreduzier-Ventileinheit von einem Getriebe-Betriebsart-Detektor bestimmt. Die Druckreduzier-Ventileinheit steuert anschließend die Postion der Ventilspindel der Fluiddruck-Steuereinheit, wobei ein Magnetventil die Feineinstellung der Ventilspindel vornimmt.

Durch die Verwendung der vielen, verschiedenen hydraulischen Schaltelemente, wie Fluiddruck-Steuereinheit oder Magnetventil, wird der Aufbau der Steuerungseinrichtung sehr kompliziert und aufwendig.

Um den Aufbau der Steuereinrichtung zu vereinfachen, wurden Steuerventile entwickelt, die mehrere Funktion gleichzeitig erfüllen.

So offenbart beispielsweise die gattungsgemäße DE-A-39 28 048 eine Steuereinrichtung mit einem Überbrückungskupplungs-Steuerventil, einem Hauptdruckregulierventil, einem Magentventil und einem "Solenoid Pressure Limit Valve". Das Überbrückungskupplungs-Steuerventil besteht aus einem elektromagnetischem Schaltelement und einem Ventilkörper mit einem darin verschieblich angeordneten Steuerkolben, der verschiedene Ein- und Ausgänge öffnet und schließt. Der Steuerkolben weist an seinem dem elektromagnetischen Schaltelement abgewandten Ende eine Druckfeder auf, die den Steuerkolben in Richtung des elektromagnetischen Schaltelementes vorspannt. Am schaltelementzugewandten Ende des Steuerventils liegt eine Steuerdruckkammer, die über einen Steuerdruck-Ausgang mit dem Sumpf der Hydraulikölversorgung und über einen Steuerdruck-Anschluß mit einer den Steuerdruck erzeugenden Pumpe verbunden ist. Der Steuerdruck wird mit Hilfe des "Solenoid Pressure Limit Valve" konstant, bespielsweise bei 8 bar, gehalten, während das Hauptdruckregulierventil den in der Überbrückungskupplung wirkenden Druck bereitstellt. Das Magnetventil baut einen wirksamen Gegendruck von etwa 1 bar auf, der dem Abströmen des Hydrauliköls aus dem Wandler entgegenwirkt, um so die Überbrückungskupplung hydraulisch einzuspannen.

Mit Hilfe des elektromagnetischen Schaltelementes kann entweder der Steuerdruck-Ausgang zum Sumpf oder der Steuerdruck-Anschluß mit der Steuerdruckkammer verbunden werden.

Soll die Kupplungseinrichtung geöffnet werden, wird der Steuerdruck-Anschluß geschlossen. Die am schaltelementabgewandten Ende des Steuerkolbens angeordnete Druckfeder schiebt den Steuerkolben in seine Ausgangsposition und drückt die in der Steuerdruckkammer befindliche Hydraulikflüssigkeit über den Steuerdruck-Ausgang in den Sumpf der Hydraulikölversorgung. Durch die Position des Steuerkolbens wird der Wandlerkupplungs-Gegendruck-Ausgang mit dem Versorgungsdruck-Anschluß, an dem ein konstanten Versorgungsdruck anliegt, verbunden, während der Wandlerkupplungs-Steuerdruck-Anschluß mit dem Hydraulikölkühler verbunden wird. Aufgrund der Druckdifferenz öffnet sich die Kupplungseinrichtung.

öffnet das elektromagnetische Schaltelement den Steuerdruck-Anschluß, schließt es gleichzeitig den Steuerdruck-Ausgang zum Sumpf. Dadurch wird der Steuerkolben entgegengesetzt zur Kraft der Druckfeder verschoben und verbindet so den Wandlerkupplungssteuerdruck-Anschluß mit dem Steuerdruck-Anschluß, während der Wandlerkupplungs-Gegendruck-Ausgang über eine weitere Leitung mit dem zum Ölsumpf führenden Steuerdruck-Ausgang verbunden wird. Dadurch wird die Wandlerkupplung geschlossen.

Das elektromagnetische Schaltelement, ein sogenanntes pulsweitenmoduliertes Magnetventil, wird mit einer Schaltfrequenz von beispielsweise 40 Hz betätigt, wobei die öffnungsdauer pro anliegendem Steuerimpuls, die sogenannte Pulsweite, variiert werden kann. Liegt die Pulsweite bei 100%, ist der Steuerdruck-Anschluß über die gesamte Dauer des Schaltimpulses geöffnet und die Kupplungseinrichtung bleibt eingekuppelt. Bei geringerer Pulsweite, also einer geringeren öffnungsdauer des Steuerdruck-Anschlusses, kommt es zu einem unvollständigen Schließen der Kupplungseinrichtung, d.h. die Kupplungseinrichtung ruscht durch. Dadurch kann der Schlupf zwischen Turbinen- und Pumpenrad gezielt beeinflußt werden.

Diese Anordnung hat den Nachteil, daß die unterschiedlichen Anschlüsse mit unterschiedlichen Drücken versorgt werden müssen, die nur über zusätzliche hydraulische Komponenten, wie das "Solenoid Pressure Limit Valve" oder das Magnetventil, realisierbar sind. Durch das hydraulische Einspannen kann die Überbrückungskupplung nur in einem Druckbereich von 1 bis 8 bar betrieben werden. Außerdem ist nachteilig, daß der Steuerkolben nur durch die Feder vorgespannt wird und bei geringen Pulsweiten zu einem schaltungsbedingten Flattern neigt.

Es ist daher Aufgabe der Erfindung, ein Steuer-/Regelventil bereitszustellen, das bei seiner Verwendung den Aufbau einer Steuerungseinrichtung für hydraulische Drehmomentwandler automatischer Schaltgetriebe für Kraftfahrzeuge deutlich vereinfacht.

Die Aufgabe wird gelöst durch die Merkmale des Anspruchs 1.

Vorteilhafte Weiterbildungen ergeben sich aus den Unteransprüchen.

Es kann vorteilhaft sein, wenn bei dem schalt-/Regelventil der erste Druck-Anschluß ein Steuerdruck-Anschluß ist; die zweiten Druck-Anschlüsse einen Versorgungsdruck-Anschluß umfassen, der über die erste Arbeitskammer mit einem ersten Wandlerkupplungs-Anschluß verbunden ist; die zweiten Druck-Anschlüsse einen Versorgungsdruck-Anschluß umfassen, der über die zweite Arbeits-kammer mit einem Kühler-Ausgang verbunden ist; die zweiten Druck-Anschlüsse einen Wandleransdens umfassen, der über die dritte Arbeitskammer mit einem Gemeinschaftsdruck-Ausgang verbundenen ist; und die zweiten Druck-Anschlüsse einen in der vierten Arbeitskammer endenden zweiten Wandler-Anschluß umfassen, da dadurch mehrere Anschlüsse gleichzeitig miteinander verbunden werden können und somit der Steuerungsaufwand abnimmt.

Es kann günstig sein, wenn die Gegendruckkammer am der Steuerdruckkammer entgegengesetzten Ende des Ventilkörpers mindestens eine Versorgungsleitung für das fluide Medium aufweist wobei das fluide Medium aus der Versorgungsleitung einen Gegendruck in der Gegendruckkammer ausübt.

Es ist auch günstig, wenn der Gegendruck in der Gegendruckkammer variabel ist, da somit Druckänderungen innerhalb der Steuerdruckkammer nachgefolgt werden kann.

Weiterhin kann es günstig sein, wenn mindestens ein Kugelwechselventil in der Versorgungsleitung der Gegendruckkammer vorgesehen ist, um eine Zwangsrückschaltung nach "Unlock" zu ermöglichen.

Es kann günstig sein, wenn das Schaltelement ein elektromagnetisch angesteuertes Schaltelement, wie ein pulsweitenmoduliertes Magnetventil, ist, da der wirksame Druck in Abhängigkeit von der öffnungsdauer eingestellt werden kann.

Besonders vorteilhaft ist es, wenn das Schaltelement ein elektrohydraulisch angesteuertes Schaltelement, wie ein Variable-Force-Magnetventil, ist, da bei solchen Ventilen der Druck durch die anliegende elektrische Spannung genau eingestellt werden kann.

Weiterhin kann es günstig sein, wenn das fluide Medium Hydrauliköl ist, da Hydrauliköl im allgemeinen inkompressibel ist, gleichzeitig schmierende Eigenschaften besitzt und an das Aufgabengebiet optimal angepaßt ist.

Durch Verwendung des erfindungsgemäßen Schalt-/Regelventils kann die Anzahl der notwendigen Schaltelemente gegenüber dem Stand der Technik deutlich reduziert werden. Durch das hydraulische Einspannen des Steuerkolbens ist ein Flattern des Steuerkolbens bei niedrigen Drücken ausgeschlossen. Bei Verwendung eines Variabel Force Magnetventils als Schaltelement ist der öldurchfluß sehr hoch, wodurch schnelles Schalten der Wandlerüberbrückungskupplung ermöglicht wird. Schließlich ist ein Regeln des Lock-Up-Anlagedrucks bis auf 0 bar realisierbar, so daß sich die Lock-Up-Kapazität vergrößert.

Sobald das Schaltelement den Steuerdruck-Anschluß öffnet, wird der zum Sumpf der Hydraulikölsteuerung führende Steuerdruck-Ausgang geschlossen. Dadurch baut sich in der Steuerdruckkammer Druck auf, der das Steuerelement in Richtung schaltelementabgewandtes Ende so weit verschiebt, daß der Abschnitt größeren Durchmessers des Schaltelementes am Absatz der Führungsbohrung anschlägt. Das Hydrauliköl in der Steuerdruckkammer strömt anschließend weiter über die Steuerelementlängsbohrung in die Regeldruckkammer und verschiebt den Steuerkolben entgegen der Kraft des am schaltelementabgewandten Ende des Steuerkolbens angeordneten federnden Elementes. Über die so gebildete Arbeitskammer kann anschließend das Hydrauliköl vom Versorgungsdruck-Anschluß über den ersten Steuerdruck-Anschluß in den Wandler strömen.

Wird das Schaltelement in die Unlock-Lage geschaltet, öffnet das Schaltelement den Steuerdruck-Ausgang zum Sumpf und schließt gleichzeitig den Steuerdruck-Anschluß. Dadurch fließt die in der Steuerdruckkammer befindliche Hydraulikflüssigkeit über den Steuerdruck-Ausgang in den Sumpf der Hydrauliksteuerung und der Druck in der Steuerdruckkammer fällt ab. Sobald der in der Steuerdruckkammer wirkende Druck abnimmt, verschiebt sich der Steuerkolben, bedingt durch die Kraft des vorgespannten federnden Elementes und den in der über das Kugelwechselventil in der Gegendruckkammer wirkenden Druck in Richtung schaltelementzugewandtes Ende, bis der Steuerkolben am Steuerelement anliegt. In diesem Schaltzustand kann das Hydrauliköl im Wandlergehäuse über den zweiten Wandler-Anschluß in den Gemeinschaftsdruck-Ausgang strömen.

Läßt der Druck in der Steuerdruckkammer weiter nach, verschiebt der Steuerkolben das Steuerelement in Richtung schaltelementzugewandtes Ende und der Wandler-Anschluß wird mit dem Kühler-Ausgang verbunden.

Durch die Verwendung des Steuerkolbens in Verbindung mit dem Steuerelement sind unterschiedliche Schaltzustände einstellbar. Innerhalb der Lock-Up-Lage ist das Schalt-/Regelventil auch in Zwischenstufen schaltbar. Dadurch ist es möglich, daß am Steuerdruck-Anschluß und am Versorgungsdruck-Anschluß gleicher Druck anliegen kann, so daß zusätzliche, den Versorgungsdruck regelnde Steuerelemente, wie Ventile oder Drosseln, entfallen. Durch eine Trennung von Steuerdruck und Versorgungsdruck werden hohe öldurchsätze und damit ein schnelles Druckregeln ermöglicht.

Nachfolgend wird die Erfindung anhand einer bevorzugten Ausführungsform sowie der begleitenden schematischen Zeichnung näher erläutert, wobei sie keineswegs auf diese beschränkt ist. Dabei zeigt:
- Fig. 1: einen Längsschnitt durch eine erfindungsgemäße Ausführungsform eines Schalt-Regelventils in geöffnetem Zustand;
- Fig. 2: eine Übersichtszeichnung der Drucksteuerung eines hydrodynamischen Drehmomentwandlers in der Lock-Up-Lage; Vergrößerung des Wandlerkupplungs-Steuerdrucks.
- Fig. 3: eine Übersichtszeichnung der Drucksteuerung eines hydrodynamischen Drehmomentwandlers kurz vor dem Schalten von der Lock-Up-Lage in die Unlock-Lage;
- Fig. 4: eine Übersichtszeichnung der Drucksteuerung eines hydrodynamischen Drehmomentwandlers in der Unlock-Lage; und
- Fig. 5: eine Übersichtszeichnung der Drucksteuerung eines hydrodynamischen Drehmomentwandlers in der Lock-Up-Lage; Verkleinerung des Wandlerkupplungs-Steuerdrucks.

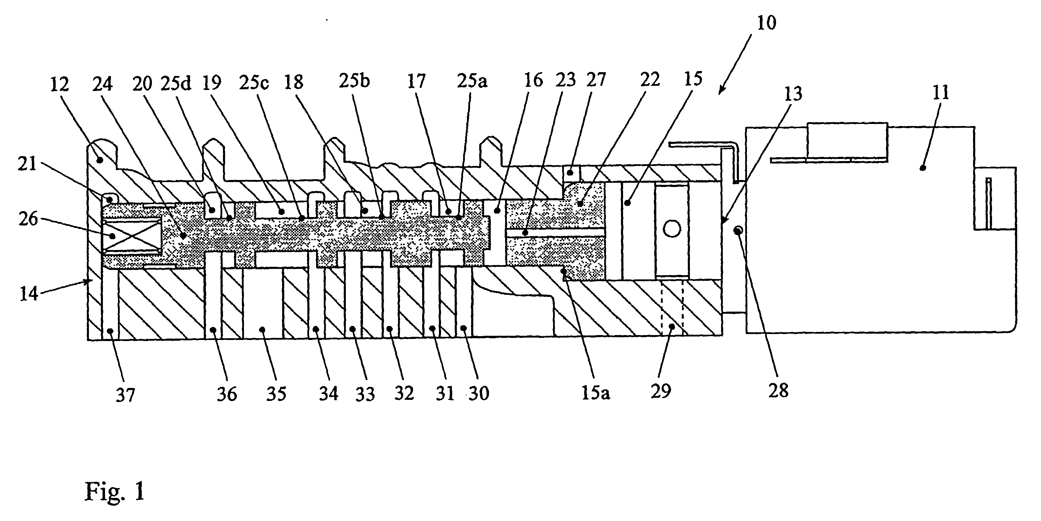

Eine bevorzugte Ausführungsform eines erfindungsgemäßen Schalt-/Regelventils 10, wie in Fig. 1 dargestellt, umfaßt ein Schaltelement 11 und einen Ventilkörper 12. Das Schaltelement 11 kann ein pulsweitenmoduliertes Magnetventil oder auch ein elektrohydraulisches Variable Force Magnetventil sein. Der Ventilkörper 12 mit einem schaltelementzugewandten Ende 13 und einem schaltelementabgewandten Ende 14 weist eine Steuerdruckkammer 15 auf, an die sich eine sich längs in Richtung des schaltelementabgewandten Endes 14 erstreckende Führungsbohrung mit einem Absatz 15a und einen Bereich kleineren Durchmessers anschließt. Die Führungsbohrung ist durch am Umfang der Bohrung angeordnete Vertiefungen in eine sich an die Steuerdruckkammer 15 anschließende Regeldruckkammer 16, vier weitere Arbeitskammern 17, 18, 19 und 20 sowie eine die Führungsbohrung abschließende Gegendruckkammer 21 unterteilt.

Im wesentlichen senkrecht zur Steuerdruckkammer 15 und zur Führungsbohrung verlaufende Bohrungen 27, 28, 29, 30, 31, 32, 33, 34, 35, 36 und 37 im Ventilkörper 12 dienen als Anschlüsse für verschiedene Hydraulikölleitungen.

Ein in der Führungsbohrung längsverschiebbar angeordneter Steuerkolben 24 weist über den Umfang verteilte Steuernuten 25a, 25b, 25c und 25d auf. Diese Steuernuten 25a, 25b, 25c und 25d können, je nachdem, ob das Steuer-/Regelventil 10 "geöffnet" oder "geschlossen" ist, die verschiedenen Ausgänge und Anschlüsse 30, 31, 32, 33, 34, 35 und 36 unter Bildung der Arbeitskammern 17, 18, 19 und 20 miteinander verbinden.

In der Steuerdruckkammer 15 ist ein Steuerelement 22 mit einem Steuerelement-Abschnitt größeren Durchmessers und einem Steuerelement-Abschnitt kleineren Durchmessers, angeordnet, wobei der Steuerelement-Abschnitt kleineren Durchmessers des Steuerelementes 22 in die Führungsbohrung ragt. Außerdem weist das Steuerelement 22 mindestens eine Steuerelementlängsbohrung 23 auf, die die Steuerdruckkammer 15 mit der Regeldruckkammer 16 verbindet.

Am schaltelementabgewandten Ende des Steuerkolbens 24 ist in einer Vertiefung ein federndes Element 26, beispielsweise eine Druckfeder, vorgesehen, die sich an der Rückwand der Gegendruckkammer 21 abstützt und so den Steuerkolben 24 in Richtung des schaltelementzugewandten Endes 13 verschieben kann.

Die Gegendruckkammer 21 am schaltelementabgewandten Ende 14 ist mit einem ersten Gegendruck-Anschluß 37 verbunden. Über diesen ersten Gegendruck-Anschluß 37 wirkt ein Gegendruck, der den Steuerkolben 24 insbesondere, wenn der Rückwärtsgang oder der erste Gang betätigt wird, in der Unlock-Lage hält, damit die Drehmomentübertragung nur über den Drehmomentwandler erfolgen kann.

Ein zweiter Gegendruck-Anschluß 27 endet im schaltabgewandten Ende der Steuerdruckkammer 15. Der am zweiten Gegendruck-Anschluß 27 wirkende Druck verschiebt das Steuerelement 22 gegen den in der Steuerdruckkammer 15 wirkenden Druck in Richtung schaltelementzugewandtes Ende 13, um so, insbesondere im ersten oder im Rückwärts-Gang, das Steuerelement 22 in der Unlock-Lage zu halten.

Über den Gegendruckanschluß 37 wirkt ebenfalls der Wandlerkupplungs-Steuerdruck, insbesondere in der Lock-Up-Lage, der als Ist-Druck auf den Steuerkolben 24 wirkt und zusammen mit der Feder 26 dem Solldruck in der Regeldruckkammer 16 entgegenwirkt.

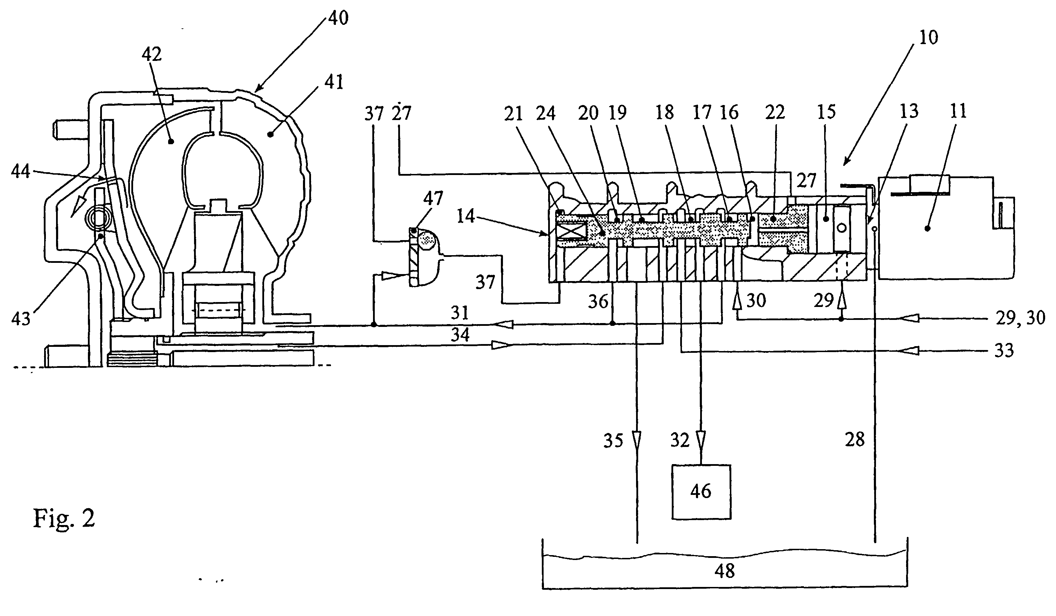

In den Fig. 2, 3, 4 und 5 ist ein bekannter hydrodynamischer Drehmomentwandler 40 mit einem erfindungsgemäßen Steuer-/Regelventil 10 gezeigt, wobei festzustellen ist, daß das erfindungsgemäße Steuer-/Regelventil 10 nicht auf diesen Typ hydrodynamischer Drehmomentwandler 40 beschränkt ist. Der Drehmomentwandler 40 besitzt ein drehbar gelagertes Pumpenrad 41 und ein im Wandlergehäuse drehbar gelagertes Turbinenrad 42. Eine Kupplungseinrichtung 43 ermöglicht eine kraftschlüssige Verbindung des Pumpenrades 41 mit dem Turbinenrad 42, um so in der Lock-Up-Lage das vom Antrieb auf das Pumpenrad 41 übertragene Drehmoment ohne Verluste an das Turbinenrad 42 weiterzugeben. Drosselbohrungen 44 ermöglichen ein Einströmen von Hydrauliköl aus dem Wandlergehäuse in die Kupplungseinrichtung 43 und umgekehrt, wodurch der Hydraulikölkreislauf geschlossen wird.

Ein Kühler 46 kühlt das in der hydraulischen Steuerung geförderte Hydrauliköl ständig, um ein Überhitzen des Hydrauliköls zu vermeiden. Eine Pumpe (nicht dargestellt), die den für die Steuerung notwendigen Versorgungsdruck aufrechterhält, fördert das Hydrauliköl aus einem ölsumpf 48 über Leitungen (nicht dargestellt) an die einzelnen Komponenten der hydraulischen Steuerungen.

Kurz vor dem Drehmomentwandler 40 ist eine Leitung vorgesehen, die von der Leitung des Wandler-Anschlusses 31 abzweigt und in einem Kugelwechselventil 47 endet, das in der zur Gegendruckkammer 21 führenden Versorgungs-Leitung 37 angeordnet ist.

Je nachdem, in welcher der beiden Leitungen 31 oder 37 ein höhere Druck anliegt, verschließt die Kugel des Kugelwechselventils 47 die Leitung mit dem geringeren Druck. Dadurch lassen sich unterschiedliche Druckzustände in der Gegendruckkammer 21 realisieren, die nur vom Schaltzustand des Schalt/Regelventils abhängig sind.

Fig. 2 zeigt den hydrodynamischen Drehmomentwandler 40 in Lock-Up-Lage mit geöffnetem Steuer-/Regelventil 10. Bei geöffnetem Steuer-/Regelventil 10 schließt das Schaltelement 11 den Steuerdruck-Ausgang 28 und öffnet gleichzeitig den ersten Steuerdruck-Anschluß 29, an dem ein konstanter Druck (beispielsweise 8 bar) anliegt. Durch den Druck in der Steuerdruckkammer 15 des Hydrauliköls wird das Steuerelement 22 in Richtung schaltelementabgewandtes Ende 14 beschleunigt, bis der Schaltelement-Abschnitt größeren Durchmessers des Steuerelementes 22 am Absatz 15a der Führungsbohrung anschlägt. Mit dieser Bewegung des Steuerelementes 22 wird auch der Steuerkolben 24 gegen den in der Gegendruckkammer 21 wirkenden Gegendruck und gegen die Kraft des federnden Elementes 26 verschoben. Das in der Gegendruckkammer 21 befindliche Hydrauliköl wird über den Gegendruck-Anschluß 37 in das Ölleitungssystem zurückgeschoben.

Das auf Anschlag befindliche Steuerelement 22 hält den Steuerkolben 24 in der Lock-Up-Lage. Der Steuerkolben 24 kann sich jedoch in geringem Maße axial bewegen, um so den Wandlerkupplungs-Steuerdruck 31 regeln zu können. Nachfolgend wird in Fig. 2 der Fall beschreiben, bei dem der Wandlerkupplungs-Steuerdruck in der Gegendruckkammer 21 zu niedrig ist, also erhöht werden muß.

Das Solldruck-Signal für den Wandleranschluß 31 wird vom Schaltelement 11 erzeugt, liegt in der Arbeitskammer 15 an und wird über die Steuerelementlängsbohrung 23 in die Regeldruckkammer 16 geleitet, wo es eine Kraft auf den Steuerkolben 24 in Richtung schaltelementabgewandtes Ende ausübt. Das Ist-Druck-Signal im Wandleranschluß 31 wirkt in der Gegendruckkammer 21 zusammen mit der Feder 26 auf den Steuerkolben 24 und übt eine Kraft in Richtung schaltelementzugewandtes Ende aus.

Für den Steuerkolben 24 gilt das Gesetz der "Kraftausgeglichenheit". Da der Druck im Wandleranschluß 31 in Fig. 2 zu niedrig ist, schiebt der Solldruck in Arbeitskammer 16 den Steuerkolben 24 in Richtung schaltelementabgewandtes Ende.

Hierdurch wird der Druck im Wandlerkanschluß 31 über den Wandle-Anschluß 36 durch den Steuerkolben 24 vom Sumpf 35 abgeschnitten und zugleich mit dem Versorgungsdruck-Anschluß 30 verbunden. Über diesen Anschluß strömt Hydrauliköl unter Druck 2 vom Versorgungsdruck-Anschluß 30 durch die Arbeitskammer 17 über den ersten Wandler-Anschluß 31 in das Gehäuse des Drehmomentwandlers 40 und erhöht den Druck auch in der Gegendruckkammer 21: der Steuerkolben ist nun kraftausgeglichen.

Gleichzeitig wird der Wandler-Anschluß 34 über die Arbeitskammer 19 mit dem Gemeinschaftsdruck-Ausgang 35 verbunden, so daß Hydrauliköl aus der Kupplungseinrichtung 43 in den ölsumpf 48 abfließen kann.

Durch den über den ersten Wandler-Anschluß 31 wirkenden hohen Druck wird die Kupplungseinrichtung 43 gegen den in der Kupplungseinrichtung 43 wirkenden Druck vorgespannt, so daß es zu einer kraftschlüssigen Verbindung des Pumpenrades 41 mit dem Turbinenrad 42 kommt (Lock-Up-Lage).

Um den Hydraulikölkreislauf zu schließen, ermöglichen Drosselbohrungen 44 (möglich wären auch radiale Kanäle in den Belägen der Kupplungsscheiben) ein Einströmen des Hydrauliköls aus dem Wandlergehäuse in die Kupplungseinrichtung 43 und von dort weiter zum Wandler-Anschluß 34.

Schließlich stellt die weite Steuernut 25b unter Bildung der Arbeitskammer 18 eine Verbindung zwischen dem Versorgungsdruck-Anschluß 33 und dem Kühler-Anschluß 32 her, so daß das Hydrauliköl über die Arbeitskammer 18 in den Kühler 46 abfließen kann.

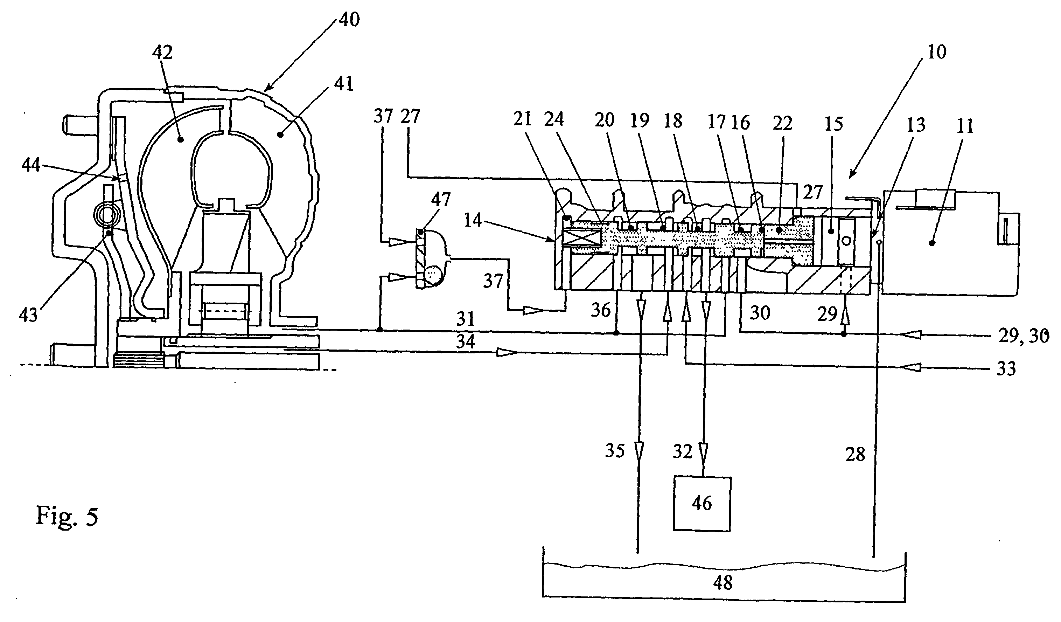

In Fig. 5 ist das erfindungsgemäße Steuer-/Regelventil 10 kurz nach dem Schalten des Schaltelementes 11 von der Lock--Up-Lage in die Unlock-Lage gezeigt, hier bei niedrigen Gängen, wie dem ersten Gang oder dem Rückwärtsgang, da bei diesen Gängen eine Übertragung des Drehmomentes im Wandler für besseren Fahrkomfort nur in der Unlock-Lage erfolgen soll. Dabei öffnet das Schaltelement 11 den Steuerdruck-Ausgang 28 und schließt gleichzeitig den ersten Steuerdruck-Anschluß 29, so daß das Hydrauliköl aus der Steuerdruckkammer 15 über den Steuerdruck-Ausgang 28 in den ölsumpf 48 abfließt.

Der am zweiten Gegendruck-Anschluß 27 nur beim Rückwärtsgang und beim ersten Gang anliegende Druck schiebt das Steuerelement 22 in Richtung schaltelementzugewandtes Ende bis zum Anschlag. Der ebenfalls nur beim Rückwärtsgang und beim ersten Gang an der Versorgungsleitung 37 anliegende Druck verschiebt die Kugel des Kugelwechselventils 47, verschließt die Leitung zum ersten Wandleranschluß 31 und gelangt über die Versorgungs Leitung 37 zur Gegendruckkammer 21, wo er zusammen mit der Kraft des federnden Elementes 26 den Steuerkolben 24 auch in Richtung schaltelementzugewandtes Ende 13 bis zum Anschlag verschiebt.

Dabei wird das noch in der Regeldruckkammer 16 befindliche Hydrauliköl über die Steuerelementlängsbohrung 23 in die Steuerdruckkammer 15 gefördert.

Sobald sich der Steuerkolben 24 in dieser Endposition befindet, wird der Wandler-Anschluß 34 über die Arbeitskammer 19 mit dem Versorgungs-druckanschluß 33 und dem ersten Wandleranschluß 31 über die Arbeitskammer 18 mit dem Kühler 46 verbunden. Dadurch fließt das Hydrauliköl im Gehäuse des Drehmomentwandlers 40 und der Kupplungseinrichtung 43 ab und die Kupplungseinrichtung 43 beginnt, sich zu öffnen.

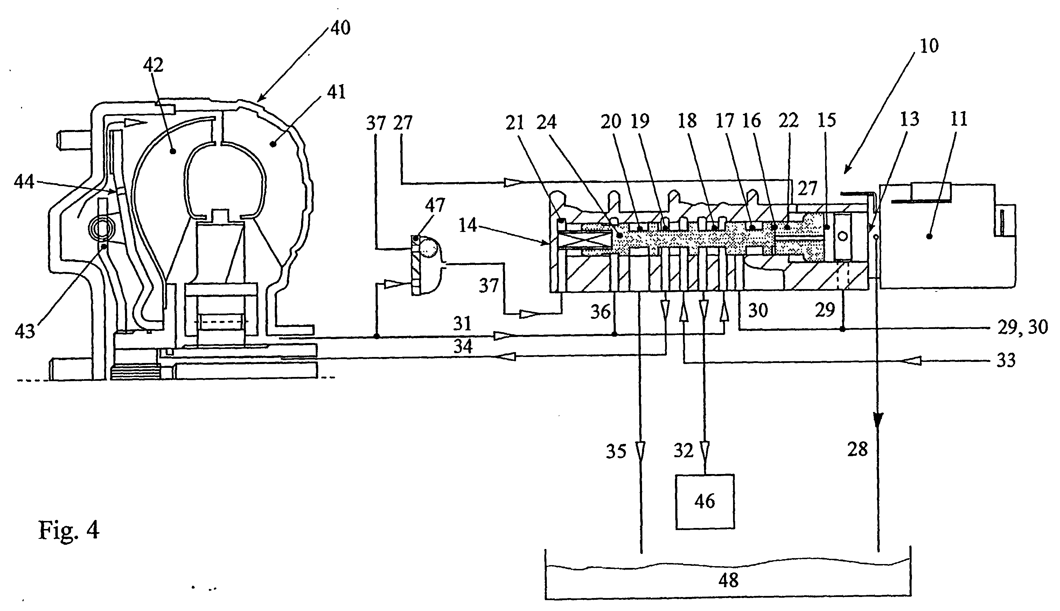

In Fig. 4 ist die Drucksteuerung eines hydrodynamischen Drehmomentwandlers in Unlock-Lage gezeigt, in der das erfindungsgemäße Steuer-/Regelventil 10 geschlossen ist. Bei geschlossenem Steuer-/Regelventil 10 öffnet das Schaltelement 11 den Steuerdruck-Ausgang 28 und sperrt den ersten Steuerdruck-Anschluß 29, so daß der Steuerkolben 24 und das Steuerelement 22 durch den in der Gegendruckkammer 21 wirkenden Druck und das federnde Element 26 in Richtung des schaltelementzugewandten Endes 13 verschoben werden.

Dadurch wird der Versorgungsdruckanschluß 30d durch eine Steuererhebung am Steuerkolben 24 verschlossen.

Ist der Steuerkolben 24 geschlossen, kann Hydrauliköl aus dem Wandler 40 durch den ersten Wandler-Anschluß 31 über die durch die zweite Steuernut 25b gebildete Arbeitskammer 18 und den Kühler-Ausgang 32 in den Kühler 46 fließen.

Gleichzeitig ermöglicht der Steuerkolben 24 eine Verbindung des Versorgungsdruck-Anschlusses 33, an dem ein Druck (beispielsweise 6 bar) anliegt, über die Arbeits-kammer 19 mit dem Wandler-Anschluß 34. Durch den am Wandleranschluß 34 anliegenden Druck wird die im Drehmomentwandler 40 angeordnete Kupplungseinrichtung 43 geöffnet, so daß die kraftschlüssige Verbindung zwischen dem Pumpenrad 41 und dem Turbinenrad 42 gelöst ist. Da in der Leitung zwischen dem Wandlergehäuse und dem ersten Wandler-Anschluß 31 ein geringerer Druck anliegt, strömt das Hydrauliköl aus dem Wandler-Anschluß 34 über die Kupplungseinrichtung 43 in das Wandlergehäuse und von dort weiter über den ersten Wandler-Anschluß 31 in den Kühler 46 (Unlock-Lage).

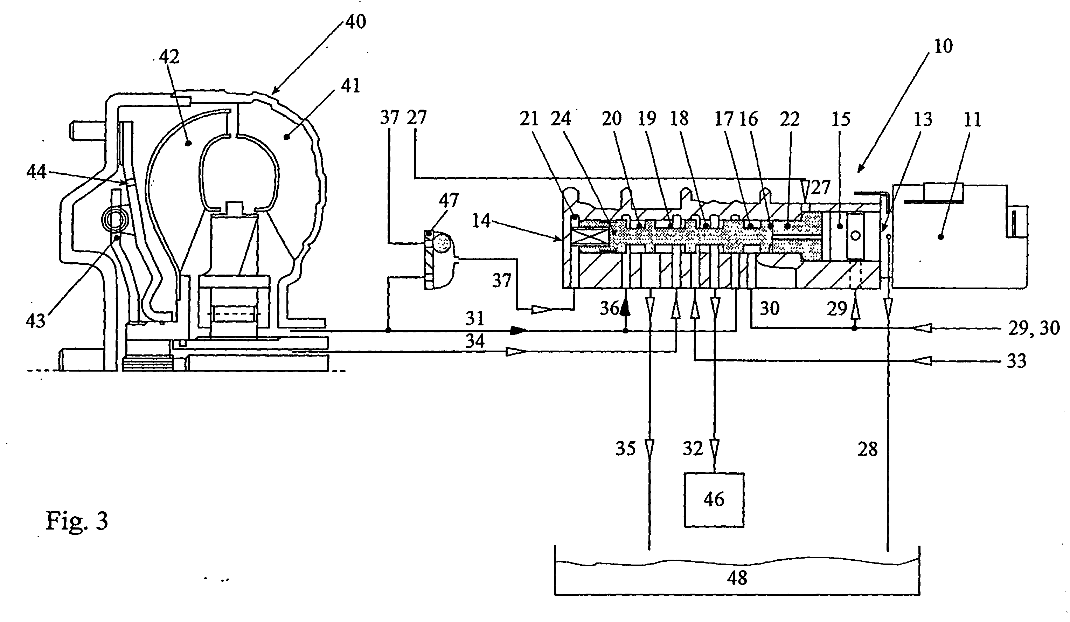

In Fig. 3 ist das erfindungsgemäße Schalt-/Regelventil 10 ebenfalls in der Lock-Up-Lage dargestellt.

Nachfolgend wird in Fig. 3 der Fall beschrieben, bei dem der Druck im ersten Wandleranschluß 31 zu hoch ist, also abgesenkt werden muß. Da der Druck im ersten Wandler-Anschluß 31 höher als der Solldruck in der Arbeitskammer 16 ist, schiebt der Steuerkolben 24 in. Richtung schaltelementzugewandtes Ende. Hierdurch wird der Druck im ersten Wandleranschluß 31 durch den Steuerkolben 24 von dem Versorgungs-Druckanschluß 30 abgeschnitten und zugleich über den Wandler-Anschluß 36 mit dem Sumpf 35 verbunden. Über diesen Wandler-Anschluß strömt Hydrauliköl vom Gehäuse des Drehmomentwandlers 40 in den Sumpf, wodurch dort, wie auch in der Gegendruckkammmer 21, der Druck absinkt. Der Wandlerkupplungs-Steuerdruck ist so dem niedrigeren Solldruck nachgefolgt, und der Steuerkolben ist "kraftausgeglichen".

Durch das erfindungsgemäße Schalt-/Regelventil 10 kann auf sehr einfache und elegante Weise auf eine Vielzahl sonst notwendiger Steuerelemente, wie Ventile oder Drosseln, verzichtet werden. Gleichzeitig wird ein unerwünschtes Flattern des Schalt-/Regelventils 10 bei Schaltzuständen um die Unlock-/Lock-Up-Lage verhindert, da der Steuerkolben 24 ständig zwischen den in der Gegendruckkammer 21 und der Steuerdruckkammer 15 bzw. Regeldruckkammer 16 wirkenden Drücken hydraulisch eingespannt ist.

Die Gegendruckkammer 21 ermöglicht außerdem ein Abbremsen des Steuerkolbens 24 beim Umschalten des Schaltelementes 11 und baut so auftretende Druckstöße ab.

Obwohl die Erfindung anhand eines bevorzugten Ausführungsbeispiels erläutert wurde, sind dem Fachmann Abwandlungen und Änderungen ohne weiteres ersichtlich, die ebenfalls unter den Schutzumfang der Ansprüche fallen. Dieser ist daher keineswegs auf die beschriebene Ausführungsform beschränkt.

## Patentansprüche

1. Schalt-/Regelventil zum Steuern von hydrodynamischen Drehmomentwandlern automatischer Schaltgetriebe, mit:
- einem Schaltelement (11) und
- einem Ventilkörper (12), der
-- ein schaltelementzugewandtes Ende (13),
-- ein schaltelementabgewandtes Ende (14),
-- eine Steuerdruckkammer (15) für ein fluides Medium,
-- eine sich von der Steuerdruckkammer (15) bis zum schaltelementabgewandten Ende (14) erstreckende Führungsbohrung,
-- einen in der Führungsbohrung angeordneten Steuerkolben (24) mit mindestens einer Steuernut (25a, 25b, 25c, 25d),
-- eine Gegendruckkammer (21) am schaltelementabgewandten Ende (14),
-- einen Steuerdruck-Ausgang (28) für das fluide Medium aus der Steuerdruckkammer,
-- einen ersten Druck-Anschluß (29) zur Steuerdruckkammer (15) für das fluide Medium,
-- mindestens einen Versorgungs-Druckanschluß (30,33), Arbeitskammern, Wandler-Anschlüsse, einen Sumpf-Anschluß, wobei die Anschlüsse je nach Betriebszustand über mindestens eine Arbeitskammer und zugehörige Steuernuten verbindbar sind, und
-- mindestens ein federndes Element (26) am schaltabgewandten Ende des Steuerkolbens (24) aufweist;
**gekennzeichnet durch**
- ein in der Steuerdruckkammer (15) angeordnetes gestuftes Steuerelement (22), dessen schaltelementabgewandtes dünneres Ende in die Führungsbohrung des Ventilkörpers (12) ragt und dessen dickeres Ende eine Abschrägung aufweist, wobei eine Längsbohrung (23) im Steuerelement die Steuerdruckkammer (15) mit einer vom Steuerkolben (24) und dem Steuerelement (22) gebildeten Regeldruckkammer (16) verbindet und wobei im schaltelementabgewandten Ende der Steuerdruckkammer (15) im Bereich der Abschrägung ein Gegendruck-Druckanschluß (27) endet.

2. Schalt-/Regelventil nach Anspruch 1, **dadurch gekennzeichnet, daß**
- der eine Versorgungsdruck-Anschluß (30) über eine erste Arbeitskammer (17) mit einem ersten Wandlerkupplungs-Steuerdruck-Anschluß (31) verbindbar ist;
- ein Wandlerkupplungs-Versorgungsdruck-Anschluß (33) über eine zweite Arbeitskammer (18) mit einem zum Kühler führenden Anschluß (32) verbindbar ist;
- ein Wandlerkupplungs-Gegendruck-Ausgang (34) über eine dritte Arbeits-kammer (19) mit einem Gemeinschaftsdruck-Sumpfanschluß (35) verbunden ist; und
- ein in einer vierten Arbeitskammer (20) endender zweiter Wandlerkupplungs-Steuerdruck-Anschluß (36) vorgesehen ist.

3. Schalt-/Regelventil nach Anspruch 1 oder 2, **dadurch gekennzeichnet, daß** die Gegendruckkammer (21) mit mindestens einer Versorgungsleitung (37) für das fluide Medium versehen ist, wobei das fluide Medium aus der Versorgungsleitung (37) einen variablen Gegendruck in der Gegendruckkammer (21) ausübt.

4. Schalt-/Regelventil nach Anspruch 3 , **gekennzeichnet durch** mindestens ein Kugelwechselventil (47) in der Versorgungsleitung (37) der Gegendruckkammer (21), das über den Druck im Wandleranschluß (31) und in der Versorgungsleitung (37) gesteuert ist.

5. Schalt-/Regelventil nach einem der vorangehenden Ansprüche, **dadurch gekennzeichnet, daß** das Schaltelement (11) ein elektromagnetisch angesteuertes Schaltelement, wie ein pulsweiten-moduliertes Magnetventil, ist.

6. Schalt-/Regelventil nach einem der vorangehenden Ansprüche 1 bis 4, **dadurch gekennzeichnet, daß** das Schaltelement (11) ein elektrohydraulisch angesteuertes Schaltelement, wie ein Variable-Force- Magnetventil, ist.

7. Schalt-/Regelventil nach einem der vorangehenden Ansprüche, **dadurch gekennzeichnet, daß** das fluide Medium Hydrauliköl ist.

## Claims

1. Switching/regulating valve for the control of hydrodynamic torque converters of automatic shift transmissions, with:
- a switching element (11) and
- a valve body (12) which has
-- an end (13) facing the switching element,
-- an end (14) facing away from the switching element,
-- a control-pressure chamber (15) for a fluid medium,
-- a guide bore extending from the control-pressure chamber (15) as far as the end (14) facing away from the switching element,
-- a control piston (24) arranged in the guide bore and having at least one control groove (25a, 25b, 25c, 25d),
-- a counterpressure chamber (21) at the end (14) facing away from the switching element,
-- a control-pressure outlet (28) for the fluid medium from the control-pressure chamber,
-- a first pressure connection (29) to the control-pressure chamber (15) for the fluid medium,
-- at least one supply-pressure connection (30, 33), working chambers, converter connections and a sump connection, the connections being capable, depending on the operating state, of being connected via at least one working chamber and associated control grooves, and
-- at least one resilient element (26) at that end of the control piston (24) which faces away from the switching element;
**characterized by**
- a stepped control element (22) which is arranged in the control-pressure chamber (15) and of which the thinner end facing away from the switching element projects into the guide bore of the valve body (12) and of which the thicker end has a bevel, a longitudinal bore (23) in the control element connecting the control-pressure chamber (15) to a regulating-pressure chamber (16) formed by the control piston (24) and the control element (22), and a counterpressure pressure connection (27) terminating in the region of the bevel in that end of the control-pressure chamber (15) which faces away from the switching element.

2. Switching/regulating valve according to Claim 1, **characterized in that**
- one supply-pressure connection (30) is capable of being connected via a first working chamber (17) to a first converter lock-up clutch control-pressure connection (31);
- a converter lock-up clutch supply-pressure connection (33) is capable of being connected via a second working chamber (18) to a connection (32) leading to the cooler;
- a converter lock-up clutch counterpressure outlet (34) is connected via a third working chamber (19) to a common-pressure sump connection (35); and
- a second converter lock-up clutch control-pressure connection (36) terminating in a fourth working chamber (20) is provided.

3. Switching/regulating valve according to Claim 1 or 2, **characterized in that** the counterpressure chamber (21) is provided with at least one supply line (37) for the fluid medium, the fluid medium from the supply line (37) exerting a variable counterpressure in the counterpressure chamber (21).

4. Switching/regulating valve according to Claim 3, **characterized by** at least one change-over ball valve (47) in the supply line (37) of the counterpressure chamber (21), said valve being controlled via the pressure in the converter connection (31) and in the supply line (37).

5. Switching/regulating valve according to one of the preceding claims, **characterized in that** the switching element (11) is an electromagnetically activated switching element, such as a pulse-width-modulated solenoid valve.

6. Switching/regulating valve according to one of the preceding Claims 1 to 4, **characterized in that** the switching element (11) is an electrohydraulically activated switching element, such as a variable-force solenoid valve.

7. Switching/regulating valve according to one of the preceding claims, **characterized in that** the fluid medium is hydraulic oil.

## Revendications

1. Soupape de commande/de réglage pour la commande de convertisseurs de couple hydrodynamiques de transmissions automatiques, comprenant:
- un élément de commande (11) et
- un corps de soupape (12) qui présente
- une extrémité (13) tournée vers l'élément de commande,
- une extrémité (14) opposée à l'élément de commande,
- une chambre de pression de commande (15) pour un fluide,
- un perçage de guidage s'étendant depuis la chambre de pression de commande (15) jusqu'à l'extrémité (14) opposée à l'élément de commande,
- un piston de commande (24) logé dans le perçage de commande, qui présente au moins une gorge de commande (25a, 25b, 25c, 25d),
- une chambre de contre-pression (21) à l'extrémité (14) opposée à l'élément de commande,
- une sortie de pression de commande (28) pour faire sortir le fluide de la chambre de pression de commande,
- un premier raccord de pression (29) menant à la chambre de pression de commande (15) pour le fluide,
- au moins un raccord de pression d'alimentation (30, 33), des chambres de travail, des raccords menant au convertisseur, un raccord menant au carter, les raccords pouvant être reliés, en fonction de l'état de fonctionnement, par le biais d'au moins une chambre de travail et de gorges de commande qui y sont associées,
- au moins un élément faisant ressort (26) à l'extrémité du piston de commande (24) qui est opposée à l'élément de commande,
**caractérisée par** un élément de commande (22) étagé disposé dans la chambre de pression de commande (15), dont l'extrémité plus fine opposée à l'élément de commande pénètre dans le perçage de guidage du corps de soupape (12) et dont l'extrémité plus épaisse présente un chanfrein, un perçage longitudinal (23) dans l'élément de commande reliant la chambre de pression de commande (15) à une chambre de pression de réglage (16) formée par le piston de commande (24) et l'élément de commande (22) et qu'un raccord de contre-pression (27) se termine dans la zone du chanfrein, à l'extrémité de la chambre de pression de commande (15) qui est opposée à l'élément de commande.

2. Soupape de commande/de réglage selon la revendication 1, **caractérisée en ce que** :
- l'un (30) des raccords de pression d'alimentation peut être relié par une première chambre de travail (17) à un premier raccord de pression de commande (31) pour l'embrayage du convertisseur de couple ;
- un raccord de pression d'alimentation (33) pour l'embrayage du convertisseur de couple peut être relié par une deuxième chambre de travail (18) à un raccord (32) menant au radiateur ;
- une sortie de contre-pression (34) pour l'embrayage du convertisseur de couple est reliée par une troisième chambre de travail (19) à un raccord de pression commune menant au carter (35) ; et en ce que
- un second raccord de pression de commande (36) pour l'embrayage du convertisseur de couple se terminant dans une quatrième chambre de travail (20) est prévu.

3. Soupape de commande/de réglage selon la revendication 1 ou 2,
**caractérisée en ce que** la chambre de contre-pression (21) est munie d'au moins une conduite d'alimentation (37) pour le fluide, le fluide émanant de la conduite d'alimentation (37) exerçant une contre-pression variable dans la chambre de contre-pression (21).

4. Soupape de commande/de réglage selon la revendication 3, **caractérisée par** au moins une soupape à bille (47) dans la conduite d'alimentation (37) de la chambre de contre-pression (21), qui est commandée par la pression dans le raccord menant au convertisseur (31) et dans la conduite d'alimentation (37).

5. Soupape de commande/de réglage selon l'une des revendications précédentes, **caractérisée en ce que** l'élément de commande (11) est un élément de commande commandé de façon électromagnétique, comme par exemple une électrovanne à modulation d'impulsions en largeur.

6. Soupape de commande/de réglage selon l'une des revendications 1 à 4,
**caractérisée en ce que** l'élément de commande (11) est un élément de commande commandé de manière électro-hydraulique, comme une électrovanne à force variable.

7. Soupape de commande/de réglage selon l'une des revendications précédentes, **caractérisée en ce que** le fluide est de l'huile hydraulique.
